# EUROPEAN PATENT SPECIFICATION

(11) **EP 1 444 743 B1**
(45) Date of publication and mention of the grant of the patent: **09.07.2008**
(21) Application number: 02789528.3
(22) Date of filing: 08.11.2002
(51) Int. Cl.: H01M 2/16

(54) **NONWOVEN SEPARATOR FOR ELECTROCHEMICAL CELL**
VLIESSTOFF-SEPARATOR FÜR ELEKTROCHEMISCHE ZELLE
SEPARATEUR NON TISSE POUR CELLULE ELECTROCHIMIQUE

(30) Priority: 12.11.2001 DE 10154896
(43) Date of publication of application: 11.08.2004
(73) Proprietor: EVEREADY BATTERY COMPANY, INC., Westlake, Ohio 44145 (US); Carl Freudenberg KG, 69469 Weinheim (DE)
(72) Inventor: AUDEBERT, Jean-Francois, Westlake, OH 44145 (US); FEISTNER, Hans-Joachim, 69518 Absteinach (DE); FREY, Gunter, 79418 Schliengen (DE); FARER, Raoul, 79098 Freiburg (DE); THRASHER, Gary, Lee, Bay Village, OH 44140 (US); WEISS,Mathias, 71642 Ludwigsburg (DE)
(74) Representative: Weber, Thomas
(86) International application number: PCT/US2002/035924
(87) International publication number: WO 2003/043103

(56) References cited:
- WO-A-99/34459
- US-A- 5 318 866
- US-A- 6 074 523

## Description

The invention pertains to an alkaline cell or battery with at least one positive and one negative electrode which are separated by a separator and located together with an alkaline electrolyte in a housing. The invention pertains in particular to a nonwoven separator and its use in an alkaline cell or battery.

Alkaline electrochemical cells usually consist of a steel can that contains the positive electrode, also referred to as a cathode, a negative electrode, here called an anode, and an electrolyte solution. In mass cells of the round cell type, the cathode, which typically contains manganese dioxide as its active material, is typically formed rotationally symmetrically against the inside of the steel can. The anode, which typically has zinc powder as its active material is generally placed in a central anode space formed by the cathode and has the same axis of rotation. The separator is situated between the anode and cathode. The alkaline electrolyte is simultaneously in contact with the cathode, anode and separator. An electric current collector is typically introduced into the anode. A seal, usually a polymeric seal, guarantees the closure of the open end of the steel can in order to enclose the electrochemically active material in the can.

In conventional round cells, the separator usually consists of an ion-permeable, multilayer textile nonwoven fabric that separates the positive electrode material from the negative one and permits transport of ions between the electrode materials. The separator also serves as a storage medium for the potassium hydroxide (KOH) solution and as a collar to prevent the anode gel from falling out of the anode space. Examples of conventional separators comprise two- and three-layer nonwoven papers, which generally result in thicknesses of the over all separator of 0.28 - 0.46 mm in the dry state. Many conventional nonwoven separators have large pores and tend to a considerable expansion of thickness when they are saturated with electrolyte solution. Consequently, such separators require a large volume.

Separators in common use are generally preformed in a can-shaped basket and then introduced into the cathode cavity during assembly, or a basket is formed during assembly by introducing several rectangular, overlapping sheets, mutually offset with respect to one another. The preformed separators in common use are typically produced from sheets of nonwoven textile, which are rolled into a cylindrical shape and cover the inside walls of the cathode, in addition to having a closed bottom. Alternatively, the closed end can be made by introducing an electrically nonconductive closure in the form of a plug that is located on the bottom of the steel can and adjoins a cylindrical convolute separator.

Conventional separators consist of a fibrous, porous paper material that generally requires multiple overlaps of the layers in order to guarantee sufficient electrical insulation and the avoidance of short circuits between anode and cathode. The use of thinner paper materials for a conventional separator suffers from the fact that the pores (openings, for instance) that are present in conventional papers permit a conductive path to form between anode and cathode. It is also possible for cathode components to penetrate the separator and form a conductive path to the anode, which leads to a short circuit in the cell. Furthermore the buildup of zinc oxide in the pores of conventional paper separators can lead to a conductive path that causes a short circuit and undesired discharge of the cell.

Many conventional separators have a relatively large thickness. Such a relatively thick separator, however, generally causes an increase in ionic resistance, with the result that ion diffusion through the separator is reduced and thereby the high discharge rate of the cell is limited. In consequence, many conventional separators also use up a large volume in the cell which could otherwise be available for electrochemically active material.

From the document EP 0572921, alkaline batteries and, particularly, separators are known in which at least part of the main fibers consists of fibrillated cellulose fibers and which additionally contain synthetic fibers. In regard to requirements for separators for alkaline cells or batteries, such separators meet the requirements with respect to alkali resistance and electrolyte adsorption. However, it is desirable in regard to maximal deployment of active materials in an alkaline cell or battery for a predetermined overall size to minimize the volume occupied by inert materials. The reduction of the thickness and weight of the separator that is used is one possibility in this regard. A limit is placed on the reduction of separator thickness, however, in that active materials, such as zinc gel in low-mercury or mercury-free cells, tend to form dendrites, which can penetrate the separator and thereby cause short circuits of the cell or battery. A standard test for this is the 3.9 Ω GPI (General Purpose Intermittent) test, which consists in discharging via a 3.9 Ω resistor for 5 min, followed by a pause for 23 h, 55 min, and another discharge. This stress test is used to test potential new separator materials with respect to their resistance to zinc dendrites.

The invention has taken on the problem of specifying an alkaline cell or battery which contains a separator that efficiently separates the negative and positive electrodes, requires minimum volume and thereby permits the maximization of the space for electrochemically active material and which permits improved ion diffusion.

The problem is solved according to the invention by an alkaline cell or battery of the type mentioned initially in which the separator has a basis weight of 20-30 g/m², a thickness of less than 0.15 mm in the dry state and an average pore size less than 14 µm. Despite a thickness of the separator in the dry state of less than 0.15 mm, no short circuits were found in the GPI (General Purpose Intermittent) test. In the GPI test cells of size LR 03 are discharged via a 5.1 Ω resistor for 5 min, followed by a pause of 23 h, 55 min. Discharging is continued until the closed cell voltage has dropped to a value of 0.9 V. Formation of internal short circuits can be recognized if the open cell voltage drops more than 0.010 V during the pause time for the cells.

The alkaline cell or battery is preferably one in which the separator has a basis weight of 20-28 g/cm², a thickness in the dry state of 0.05-0.09 mm and an average pore size of 8-14 µm. The separator advantageously contains 25-96 wt% fibrillated cellulose fibers and a synthetic fiber constituting the remainder to 100 wt%. It is particularly preferred for the separator to consist of at least 45 wt% fibrillated cellulose fibers.

Alkaline cells or batteries in which the fibrillated cellulose fibers exhibit a Shopper Riegler degree of 30-65 are especially preferred. Shopper Riegler degree in the sense of the present invention is understood as a measure for the drainage rate of a diluted paper fiber suspension according to DIN EN 25264-3 and equipment standard ZELLCHEMING V/7/61 of July 1, 1961. The drainage behavior is dependent on the surface condition and the swelling state of the fibers.

The alkaline cell or battery preferably also has a separator in which polyvinyl alcohol fibers are contained as the synthetic fibers. It is also preferable for polyvinyl alcohol fibers with a melting range of 60°C and water-insoluble polyvinyl alcohol fibers with a titer of less than or equal to 1.1 dtex each to be contained. The use of two different polyvinyl alcohol fibers permits a favorable distribution of the pores in the separator as well as the production of a separator with the required stability.

It has proven particularly favorable for security against short circuits that the alkaline cells or batteries of the invention contain a double layer as the separator. Thereby both the storage capacity for electrolyte and the short circuit resistance are additionally improved.

The alkaline cells or batteries of the invention preferably have the sizes LR61 (AAAA), LR03 (AAA) or LR6(AA). The reduction of the installation thickness and thus the reduction of the space not available for the active chemical elements is particularly advantageous for these small sizes, because their energy content is increased disproportionately in regard to the amount of extractable power. In relation to a cell size of LR03 (AAA), a comparable material occupies a volume of 0.0674 cm³, while the material of the invention occupies a volume of only 0.0528 cm³. This means that in a cell of this size of the invention, 22% more internal volume is available for the active components.

In the alkaline cells or batteries of the invention a separator that is produced by a paper laying method or a wet laying method is used.

In the alkaline cells or batteries of the invention a separator is preferably employed whose solvent-spun cellulose fibers with a titer of 0.5-3 dtex are cut to a length of 3-6 mm and fibrillated in wet grinding process, where a Shopper Riegler degree of 30-36 serves as the target measure for the fibrillation.

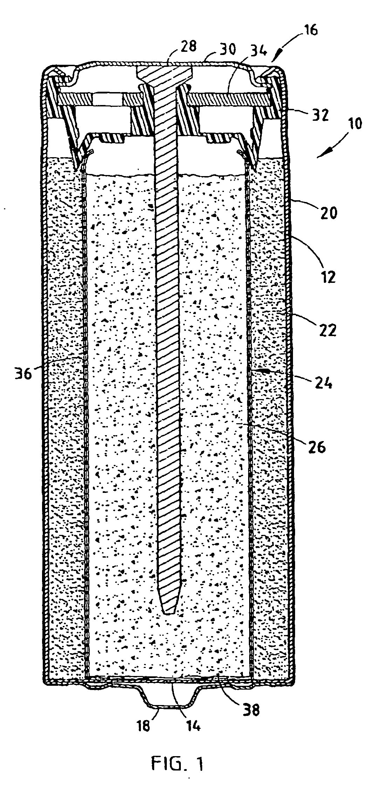

The invention is described in greater detail below on the basis of Figure 1 which is a longitudinal section of an electrochemical cell.

Figure 1 shows a cylindrical alkaline electrochemical cell 10. Electrochemical cell 10 consists of a cylindrical steel can 12 with a closed bottom end 14 and an open top end 16. Welded or otherwise affixed to the bottom end of cylinder 12 is a positive steel layer 18, with an extension piece in its center which represents the positive contact element of cell 10. A closure unit with an outer negative layer 30 that constitutes the negative contact element of cell 10 is placed at the upper open end 16 of steel cylinder 12. A metallized plastic film 20 covers the outer wall of cylinder 12 except for its outer ends. Film 20 extends over the outer edge of positive layer 18 and may, as illustrated, extend over part of negative layer 30.

A tubular cathode 22 is located on the inside of cylinder 12. Cathode 22 consists of a mixture of manganese dioxide, graphite, potassium hydroxide solutions and additives. A spiral shaped nonwoven fabric separator 24 is arranged on the inside of cathode 22. In the anode 26, an alkaline electrolyte is arranged inside the cylindrical interior of separator 24 and in contact with a collector electrode 28, in which a conductive elongated rod is arranged. Anode 26 consists of zinc powder, a gelling agent and additives. Accordingly, cathode 22 is configured as the positive electrode and anode 26 as the negative electrode.

Current collector 28 contacts outer negative layer 30, which forms the negative contact element of cell 10. Outer negative layer 30 preferably consists of coated steel in contact with current collector 28 by contact pressure or a weld seam. An annular polymer seal 32 (e.g., polyamide 6.6) is placed in the open end 16 of steel can 12 in order to prevent the escape of electrochemically active cell material from can 12. An inner layer 34, preferably consisting of hard metal, is intended to increase stability and to improve the radial compression of 32 and its effect. The inner layer 34 contacts the central hub and the outer edge of seal 32. Collector electrode 28, seal 32 and inner layer 34 jointly form a closure unit that is arranged in the open end 16 of cylinder 12 to seal off the active components inside the cell. It is advantageous that outer negative layer 30 is electrically insulated against cylinder 12 by a polymer seal 32.

Thin nonwoven fabric separator 24 of electrochemical cell 10 has according to the invention a high electrical resistance (i.e., low electrical conductivity) and a high ion permeability, but is simultaneously of low volume, so that more space is left for electrochemically active materials in cylinder 12. Separator 24 has a cylindrical side wall 36 and a closed bottom end 38. Spiral-shaped separator 24 consists of at least one ply of nonwoven fabric paper. It preferably has at least two plies in order to form a double layer of separator material between anode 26 and cathode 22. According to the invention, a two-ply spiral-shaped separator 24 is described. Separator 24, however, can advantageously also consist of one or more plies and thus achieve the desired electrical resistance and ion-permeability in a separator with low volume without deviating from the specifications of the invention.

Separator 24 of the present invention consists of a nonwoven fabric separator material such as fiber paper with a basis weight between 20 and 28 g/cm². The separator material has a dry layer thickness of less than 0.15 mm, preferably, however, more than 0.02 mm. The thickness is preferably between 0.05 and 0.09 mm. The separator material has an average pore size less than 14 µm, preferably between 8 and 14 µm. The separator material contains at least 45 wt% fibrillated cellulose and at least 5 wt% synthetic fibers. Separator 24 preferably contains at least 45 wt% synthetic fibers. The synthetic fiber consists of polyvinyl alcohol fibers. Separator 24 contains synthetic fibers in the form of polyvinyl alcohol binder fibers, which are soluble in water at 60°C, and synthetic fibers in the form of water-insoluble polyvinyl alcohol fibers. Both types of fiber have a size less than or equal to 1.1 dtex. The use of two different types of polyvinyl alcohol fibers permits the desired distribution of pore sizes and sufficient stability in the separator material.

The ply of nonwoven fabric separator material contains solvent-spun cellulose fibers, the size of which before fibrillation varies between 0.4 and 3.0 den, while their cut length is between 3 and 12 mm. The cellulose fibers are fibrillated in a well known refinement and digestion process in paper manufacturing. The degree of fibrillation is carried out to an extent that the fibrillated cellulose fibers have a Shopper Riegler degree of 30 to 65. The separator material with the cellulose fibers may contain lyocell pulp, which may be obtained from paper manufacturers. A commercially available lyocell pulp is Lyocell Pulp VZL from the firm STW (Schwarzwälder Textil-Werke).

Nonwoven fabric separator 24 is produced by processing lyocell pulp into sheets/plies, as is known from paper manufacturing. Thus the cellulose fibers are fibrillated in order to achieve the desired result. Individual separators are cut out of the plies of separator material and formed into a cylindrical basket with a closed end. As described in US Patent No. 6,270,833, a ply of separator material is formed into a cylinder and inserted into a cell. The above-cited patent describes the production of a separator with a round closed end.

Each individually formed separator is introduced into the cathode located in the steel can such that it separates the positive and negative electrodes from one another. Filling with anode gel and electrolyte takes place subsequently to the introduction of the separator. Thereafter, the current collector and the seal arrangement are put in place and thus the open end of the steel can is closed off with them.

Separator 24 can be employed in various types and sizes of electrochemical cells. Separator 24 is employed, for instance, in cylindrical electrochemical cells of size LR61 (AAAA), LR03 (AAA) and LR6 (AA). Typical maximum dimensions of size LR03 (AAA) are 10.5 mm diameter and 40.5 mm height, of size LR6 (AA), 14.5 mm diameter and 50.5 mm height, and of size LR61(AAAA), 8 mm diameter and 42 mm height. Due to the reduced separator thickness, electrochemical cells in which separator 24 is employed achieve an increase in the volume available for electrocemically active components.

Electrochemical cells in which separator 24 is employed additionally achieve an improved performance. A well known standard test for the discharging of electrochemical cells is the "General Purpose Intermittent" (GPI) test. The GPI test demands that each cell be discharged via a known electrical resistance for 5 min at the beginning of a 24-hour period until the closed cell voltage falls below 0.9 V. That is, each cell is "tested" for 5 min and has a "rest period" of 23 hours and 55 minutes per test cycle. If the open cell voltage of the partially discharged cell recovers (rises) immediately after the discharging has been ended, separator 24 has prevented the formation of a conductive path (short circuit). If, however, the open cell voltage of the partially discharged cell falls by more than 0.05 V, then the formation of a conductive path (short circuit) is indicated. The GPI test is used to test separator material for the prevention of zinc dendrite short circuits. For testing LR03 (AAA), a resistance of 5.1 Ω is used, and for testing LR6 (AA), a resistance of 3.9 Ω is used.

The average pore diameter of the separator material is determined according to the well-known industrial standard, ASTM (American Society for Testing Materials) E-1294. The cited ASTM E-1294 is described in American Society for Testing Materials E-1294-89 (confirmed 1999) under the title "Standard Test Method for Pore Size Characteristics of Membrane Filters Using Automated Liquid Porosimeter," pp. 1-2. ASTM method E-1294 uses a filter that is wetted with a fluid having comparable characteristics, as in a display with liquid-filled capillaries. The test specimen is thoroughly wetted with a fluid with low surface tension and inserted under low vapor pressure into a specimen holder arrangement. By applying an increasing air pressure vertical to the test specimen, smaller pores are revealed step by step. The airstream through the sample is specimen is the blister point (maximum pore size). The elevation of air pressure is continued until the smallest measurable pore has been reached. The information is compared to the flow rate as a function of applied pressure for dry specimens. The pore size distributions are obtained from the curves of the dry and wet specimens by the test method.

The invention will be explained further on the basis of four examples and one comparative example. For this purpose, three LR03 (AAA) cells were manufactured in each case, for which the cathode rings were pressed from manganese dioxide and graphite and inserted into the casing, a separator in the form of a double-wound convolute separator was introduced, and was filled with a zinc gel as anode, consisting of finely powdered zinc, potassium hydroxide as electrolyte and a binder. Additional liquid electrolyte was added, and the cell was closed off by inserting a current collector. As fibrillated cellulose fibers, a lyocell pulp of type VZL characterized by the indicated Shopper Riegler degree was employed. The corresponding airstream screen analyses are collected in Table 1. The mean pore diameter was determined by a Coulter porosimeter and exhibited an air permeability of 35-100 L/sec/m². The composition and characteristics of the individual separators that were used are collected in Table 1, where the thickness was determined by measurements on a specimen with a surface area of 10 cm² and a contact pressure of 1.25 kPa with a contact time of 1 sec. For the GPI test conducted with the cells, it was shown that none of the cells resulted in a short circuit under the given discharging conditions, while one of the control cells had an internal short circuit.

**TABLE 1**

| | | 1 | 2 | 3 | 4 |
|---|---|---|---|---|---|
| **LYOCELL PULP** | Dtex: | 1.7 | 1.7 | 1.7 | 1.7 |
| | Pulp Type: | VZL | VZL | VZL | VZL |
| | Shopper Riegler degree | 50.00 | 48.50 | 52.00 | 50.00 |
| | Airstream screen analysis: | | | | |
| | Residue 100 um: | 97.80% | 97.60% | 99.00% | 97.80% |
| | Residue 200 um: | 96.60% | 96.20% | 98.60% | 96.60% |
| | Residue 500 um: | 92.80% | 93.40% | 95.80% | 92.80% |
| | Residue 1000 um: | 92.20% | 91.40% | 71.20% | 92.20% |
| | % v % of mixture as a whole: | 45.00% | 44.10% | 45.00% | 45.00% |
| **PVA** | Dtex: | 0.33 | 0.33 | 0.33 | 0.33 |
| | %v % of mixture as a whole | 35.00 | 34.50 | 35.00 | 35.00 |

| **PVA BINDER FIBERS** | | | | | |
|---|---|---|---|---|---|
| | Dtex: | 1.10 | 1.10 | 1.10 | 1.10 |
| | % v % of mixture as a whole | 20.00 | 21.30 | 20.00 | 20.00 |

| **NONWOVEN FABRIC (SEPARATOR)** | | | | | |
|---|---|---|---|---|---|
| | Weight, g/m² | 24.10 | 24.50 | 26.00 | 23.50 |
| | Thickness (12.5 mbar) | 0.074 | 0.090 | 0.070 | 0.069 |
| **AIR PERMEABILITY, Dm³/sec*m²** | | 51 | 60 | 46 | 52 |
| **KOH (ELECTROLYTE) UPTAKE (g/m**²) | | 151 | 154 | 133 | 164 |

| **KOH (ELECTROLYTE) RISE LEVELS (mm)** | | | | | |
|---|---|---|---|---|---|
| (1 min): | Longitudinal | 11 | 12 | 15 | 12 |
| | Transverse | 10 | 10 | 14 | 10 |
| (10 min): | Longitudinal | 32 | 32 | 43 | 32 |
| | Transverse | 27 | 29 | 38 | 29 |

## Claims

1. Alkaline cell or battery with at least one positive and one negative electrode, which are separated by a separator and situated together with an alkaline electrolyte in a casing, **characterized in that** the separator has a basis weight of 20-30 g/m², a thickness in the dry state of less than 0.15 mm and an average pore size less than 14 µm.

2. Alkaline cell or battery according to Claim 1, **characterized in that** the separator has a basis weight of 20-28 g/m², a thickness in the dry state of 0.05-0.09 mm and an average pore size of 8 µm to 14 µm.

3. Alkaline cell or battery according to Claim 1 or 2, **characterized in that** the separator contains 25-95 wt% fibrillated cellulose fibers and, as the remainder to 100 wt%, a synthetic fiber.

4. Alkaline cell or battery according to Claim 3, **characterized in that** the separator has at least 45 wt% fibrillated cellulose fibers.

5. Alkaline cell or battery according to Claim 3 or 4, **characterized in that** the fibrillated cellulose fibers have a Shopper Riegler degree of 30-65.

6. Alkaline cell or battery according to Claim 3 or 4, **characterized in that** the separator contains polyvinyl alcohol fibers as synthetic fibers.

7. Alkaline cell or battery according to Claim 6, **characterized in that** polyvinyl alcohol fibers with a melting range of 60°C as binder fibers and a water-insoluble polyvinyl alcohol fiber with a titer less than or equal to 1.1 dtex in each case, are contained in the separator.

8. Alkaline cell or battery according to one or more of Claims 1-7, **characterized in that** the cell contains a double layer of the separator.

9. Alkaline cell or battery according to one or more of Claims 1-8, **characterized in that** it has the sizes LR61 (AAAA), LR03 (AAA) or LR6 (AA).

10. Separator employed in an alkaline cell or battery according to one or more of Claims 1-9, **characterized in that** it is produced by a paper-laying method.

11. Separator according to Claim 10, **characterized in that** it is produced by a wet laying method.

12. Separator according to Claim 10 or 11, **characterized in that** solvent-spun cellulose with a titer of 0.5-3 dtex is cut to a fiber length of 3-6 mm and fibrillated by a wet-grinding method.

## Patentansprüche

1. Alkalische Zelle oder Batterie mit wenigstens einer positiven und einer negativen Elektrode, die durch einen Separator voneinander getrennt sind und sich zusammen mit einem alkalischen Elektrolyten in einem Gehäuse befinden, **dadurch gekennzeichnet, dass** der Separator eine flächenbezogene Masse von 20 bis 30 g/m², eine Dicke im trockenen Zustand von weniger als 0,15 mm und eine mittlere Porengröße von weniger als 14 µm hat.

2. Alkalische Zelle oder Batterie gemäß Anspruch 1, **dadurch gekennzeichnet, dass** der Separator eine flächenbezogene Masse von 20 bis 28 g/m², eine Dicke im trockenen Zustand von 0,05 bis 0,09 mm und eine mittlere Porengröße von 8 µm bis 14 µm hat.

3. Alkalische Zelle oder Batterie gemäß Anspruch 1 oder 2, **dadurch gekennzeichnet, dass** der Separator 25 bis 95 Gew.-% fibrillierte Cellulosefasern und als Rest auf 100 Gew.-% eine synthetische Faser enthält.

4. Alkalische Zelle oder Batterie gemäß Anspruch 3, **dadurch gekennzeichnet, dass** der Separator wenigstens 45 Gew.-% fibrillierte Cellulosefasern aufweist.

5. Alkalische Zelle oder Batterie gemäß Anspruch 3 oder 4, **dadurch gekennzeichnet, dass** die fibrillierten Cellulosefasern einen Shopper-Riegler-Grad von 30 bis 65 haben.

6. Alkalische Zelle oder Batterie gemäß Anspruch 3 oder 4, **dadurch gekennzeichnet, dass** der Separator Polyvinylalkoholfasern als synthetische Fasern enthält.

7. Alkalische Zelle oder Batterie gemäß Anspruch 6, **dadurch gekennzeichnet, dass** Polyvinylalkoholfasern mit einem Schmelzbereich von 60 °C als Bindefasern und eine wasserunlösliche Polyvinylalkoholfaser mit einem Titer von jeweils kleiner oder gleich 1,1 dtex in dem Separator enthalten sind.

8. Alkalische Zelle oder Batterie gemäß einem oder mehreren der Ansprüche 1 bis 7, **dadurch gekennzeichnet, dass** die Zelle eine Doppelschicht des Separators enthält.

9. Alkalische Zelle oder Batterie gemäß einem oder mehreren der Ansprüche 1 bis 8, **dadurch gekennzeichnet, dass** sie die Größen LR61 (AAAA), LR03 (AAA) oder LR6 (AA) hat.

10. Separator, der in einer alkalischen Zelle oder Batterie gemäß einem oder mehreren der Ansprüche 1 bis 9 eingesetzt wird, **dadurch gekennzeichnet, dass** er durch ein Papierlegeverfahren hergestellt ist.

11. Separator gemäß Anspruch 10, **dadurch gekennzeichnet, dass** er durch ein Nasslegeverfahren hergestellt ist.

12. Separator gemäß Anspruch 10 oder 11, **dadurch gekennzeichnet, dass** aus Lösungsmittel gesponnene Cellulose mit einem Titer von 0,5 bis 3 dtex auf eine Faserlänge von 3 bis 6 mm geschnitten und durch ein Nassmahlverfahren fibrilliert wird.

## Revendications

1. Cellule ou batterie alcaline avec au moins une électrode positive et une négative, qui sont séparées par un séparateur et situées ensemble avec un électrolyte alcalin dans un boîtier, **caractérisée en ce que** le séparateur a un poids de base de 20-30 g/m², une épaisseur à l'état sec de moins de 0,15 mm et une taille de pores moyenne de moins de 14 µm.

2. Cellule ou batterie alcaline suivant la revendication 1, **caractérisée en ce que** le séparateur a un poids de base de 20-28 g/m², une épaisseur à l'état sec de 0,05-0,09 mm et une taille de pores moyenne de 8 µm à 14 µm.

3. Cellule ou batterie alcaline suivant l'une ou l'autre des revendications 1 et 2, **caractérisée en ce que** le séparateur contient 25-95 % en poids de fibres cellulosiques fibrillées et, comme restant jusqu'à 100 % en poids, une fibre synthétique.

4. Cellule ou batterie alcaline suivant la revendication 3, **caractérisée en ce que** le séparateur comporte au moins 45 % en poids de fibres cellulosiques fibrillées.

5. Cellule ou batterie alcaline suivant l'une ou l'autre des revendications 3 et 4, **caractérisée en ce que** les fibres cellulosiques fibrillées ont un degré de Shopper Riegler de 30-65.

6. Cellule ou batterie alcaline suivant l'une ou l'autre des revendications 3 et 4, **caractérisée en ce que** le séparateur contient des fibres d'alcool polyvinylique comme fibres synthétiques.

7. Cellule ou batterie alcaline suivant la revendication 6, **caractérisée en ce que** les fibres d'alcool polyvinylique avec un intervalle de fusion de 60°C en tant que fibres de liant et une fibre d'alcool polyvinylique insoluble avec un titre inférieur ou égal à 1,1 dtex dans chaque cas, sont contenues dans le séparateur.

8. Cellule ou batterie alcaline suivant une ou plusieurs des revendications 1 à 7, **caractérisée en ce que** la cellule contient une double couche du séparateur.

9. Cellule ou batterie alcaline suivant une ou plusieurs des revendications 1 à 8, **caractérisée en ce qu'**elle a les tailles LR61 (AAAA), LR03 (AAA) ou LR6 (AA).

10. Séparateur utilisé dans une cellule ou batterie alcaline suivant une ou plusieurs des revendications 1 à 9, **caractérisé en ce qu'**il est produit par une méthode de couchage sur papier.

11. Séparateur suivant la revendication 10, **caractérisé en ce qu'**il est produit par une méthode de couchage au mouillé.

12. Séparateur suivant l'une ou l'autre des revendications 10 et 11, **caractérisé en ce que** de la cellulose filée au solvant avec un titre de 0,5-3 dtex est coupée à une longueur de fibre de 3-6 mm et fibrillée par une méthode de broyage au mouillé.
